# FASCICULE DE BREVET EUROPEEN

(11) **EP 2 222 538 B1**
(45) Date de publication et mention de la délivrance du brevet: **21.09.2011**
(21) Numéro de dépôt: 08864420.8
(22) Date de dépôt: 08.12.2008
(51) Int. Cl.: B62D 25/14

(54) **POUTRE POUR TABLEAU DE BORD DE VÉHICULE AUTOMOBILE**
TRÄGER FÜR EIN FAHRZEUGARMATURENBRETT
BEAM FOR MOTOR VEHICLE DASHBOARD

(30) Priorité: 14.12.2007 FR 0759856
(43) Date de publication de la demande: 01.09.2010
(73) Titulaire: Faurecia Interieur Industrie, 92000 Nanterre (FR)
(72) Inventeur: BAUDART, Laurent, F-60530 Fresnoy En Thelle (FR); DA COSTA PITO, Sergio, 95800 Cergy (FR)
(74) Mandataire: Domenego, Bertrand
(86) Numéro de dépôt international: PCT/FR2008/052241
(87) Numéro de publication internationale: WO 2009/080968

(56) Documents cités:
- WO-A-03/031746
- WO-A-2005/090145
- WO-A-2007/135262

## Description

L'invention concerne une poutre pour tableau de bord de véhicule automobile destinée à s'étendre entre des montants verticaux dudit véhicule et à supporter notamment la colonne de direction du véhicule automobile. Plus précisément, l'invention concerne les extrémités d'attache d'une telle poutre aux montants verticaux du véhicule automobile.

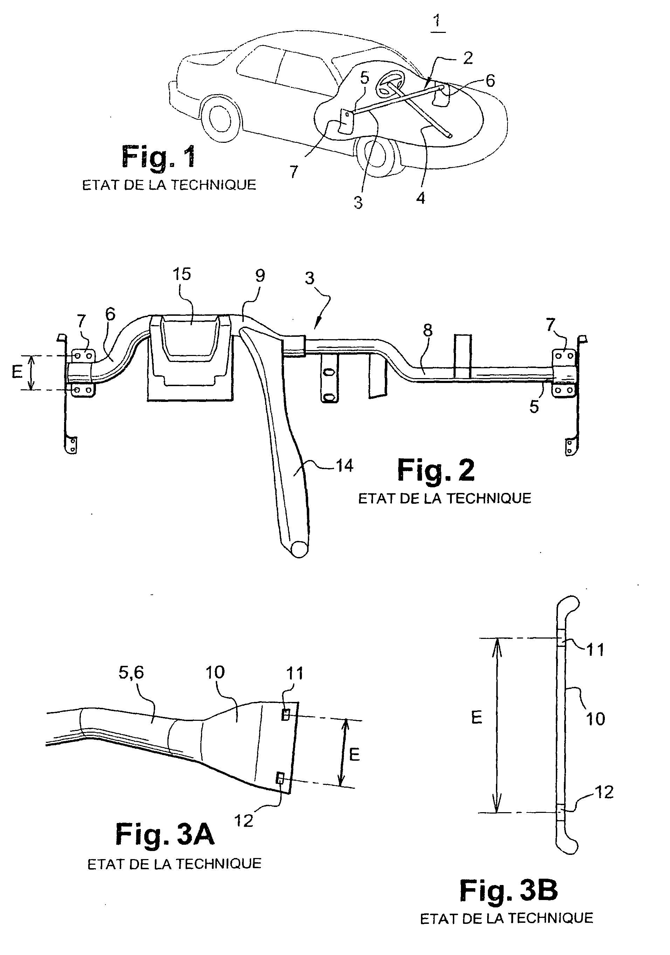

Généralement, comme cela est représenté sur la figure 1 de l'état de la technique montrant de façon schématique une structure de renfort 2 montée à l'arrière d'un tableau de bord (non représenté) d'un véhicule automobile 1, la structure de renfort 2 comporte une poutre principale 3 supportant la colonne de direction 4 du véhicule automobile 1. La poutre 3 est fixée par deux extrémités opposées 5, 6 à des montants verticaux bordant les flancs droit et gauche du véhicule 1. Plus précisément, les extrémités 5, 6 de la poutre 3 sont solidarisées aux montants verticaux du véhicule automobile 1 au moyen d'éléments de support latéraux 7, tels que des étriers.

Sur la figure 2 est représenté un exemple de bloc structurel 13 selon l'état de la technique, muni d'une poutre principale 3 formée de deux tubes 8 et 9 de diamètres différents et solidarisés l'un à l'autre par soudure par exemple. Le bloc structurel 13 comporte également une jambe de force 14 solidaire du tube 9 de plus grand diamètre, ainsi que des moyens de maintien et de positionnement 15 d'une colonne de direction, également solidaire du tube 9 de plus grand diamètre.

Dans la mesure où, le plus souvent, la place disponible pour la structure de renfort dans le cockpit d'un véhicule automobile est faible, il faut réduire au maximum l'encombrement de la poutre. Aussi, il est connu pour que la poutre principale de tableau de bord ait une raideur et une inertie suffisantes pour reprendre les vibrations transmises, notamment par le bloc moteur, d'augmenter le diamètre et/ou l'épaisseur de la poutre à l'endroit de la portion de poutre 9 destinée à être située au niveau du conducteur, de manière à ce que les vibrations ne soient pas transmises au tableau de bord et à la colonne de direction portée par cette portion 9 de la poutre 3. Le reste de la poutre, moins sollicité, présente un diamètre et une épaisseur plus faibles. Ainsi, dans l'exemple représenté à la figure 2, le diamètre du tube 9 formant la portion de poutre 3 côté conducteur est de 50 mm avec une épaisseur de 2,5 mm, tandis que le diamètre du tube 8 formant la portion de la poutre 3 côté passager est de 35 mm avec une épaisseur de 1,5 mm. Par épaisseur, on entend l'épaisseur du matériau formant le tube.

Pour fixer les extrémités 5, 6 d'une telle poutre 3 aux montants verticaux, il est connu de monter un étrier de fixation 7 sur chacune des extrémités 5, 6, dont une largeur permet d'obtenir l'entraxe E souhaité. Par entraxe, on entend la dimension s'étendant entre les deux fixations situées sur un étrier 7.

Cependant, l'ajout de telles pièces de renfort et fixation tend à augmenter de manière non négligeable la masse de la structure de renfort dans son ensemble. Par ailleurs, le montage des étriers 7 sur les extrémités 5, 6 de la poutre 3 est long et requière une précision importante.

L'autre solution connue est d'intégrer la fonction de fixation de la poutre directement dans ladite poutre, en écrasant les extrémités 5, 6 pour former un aplatissement 10 (figure 3A) sur lequel sont ménagées les zones de fixation 11, 12.

Un des inconvénients d'une telle solution est que cet aplatissement 10 fait perdre toutes les caractéristiques de raideur de la poutre 3 au niveau de ses extrémités 5, 6 aplaties. En effet, comme cela est visible sur la figure 3B, la section transversale de l'aplatissement 10 n'a aucun volume, de sorte que l'inertie à l'endroit de l'aplatissement est très faible alors même que la poutre 3 est très sollicitée au niveau de l'extrémité d'attache aplatie. Ce que l'on gagne en intégration de la fonction de fixation est donc perdu en raideur. Il est alors connu d'ajouter de pièces de renfort annexes le long de la poutre pour lui conférer la raideur nécessaire à sa fonction, ce qui est pénalisant du point de vu de la masse.

Par ailleurs, du fait du peu de place disponible dans le cockpit, la poutre doit avoir un diamètre et une épaisseur les plus petits possibles, notamment du côté passager, où les sollicitations sont moins importantes. Aussi, bien souvent, l'écrasement 10 des extrémités 5, 6 de la poutre 3 ne permet pas d'avoir un entraxe E suffisant au niveau desdites extrémités écrasées pour une fixation de bonne qualité.

W02007/135262 divulgue une traverse de planche de bord comprenant une poutre et des platines de fixation de la poutre venues de matière avec la poutre suivant les caractéristiques du préamble de la revendication 1.

Dans l'invention, on cherche à fournir une poutre pour tableau de bord dont les extrémités intègrent la fonction de fixation et ne présentant pas les inconvénients décrits ci-dessous.

Pour cela, dans l'invention, on propose d'utiliser un tube monobloc présentant différents diamètres successivement le long de l'axe longitudinal dudit tube. Plus précisément, au moins l'extrémité de la poutre destinée à être côté passager dans le véhicule automobile, et avantageusement les deux extrémités du tube, présente un diamètre élargi par rapport au reste dudit tube. Ainsi, le diamètre du tube entre les deux extrémités est le plus petit possible, de manière à réduire l'encombrement du tube dans le cockpit du véhicule automobile. Au niveau des extrémités, par contre, le diamètre du tube est suffisamment grand pour permettre un écrasement partiel permettant la fixation à des montants tout en maintenant une raideur suffisante pour reprendre les vibrations et autres efforts pouvant transiter par la poutre. L'écrasement n'est que partiel de manière à ce que la section transversale de l'extrémité considérée ait un volume et des caractéristiques en raideur suffisantes pour éviter l'utilisation de pièces de renfort le long de la poutre. Par exemple, seulement un demi cercle de l'extrémité du tube est écrasé, en direction du second demi cercle. La section transversale de l'extrémité a alors la forme d'un chapeau, la portion arrondie étant encadrée par deux flancs s'étendant dans le prolongement l'un de l'autre et dans le prolongement du diamètre de la portion arrondie fermant la section. La solution selon l'invention permet un gain de masse puisque seules les extrémités ont un diamètre agrandi (et éventuellement une épaisseur plus importante) et qu'aucune pièce de renfort n'est nécessaire. Par ailleurs, le nombre d'étapes d'assemblage est fortement diminué, puisque le tube est monobloc, c'est-à-dire formé d'un seul tenant, et qu'on utilise ni étrier de fixation ni pièces de renfort. La solution selon l'invention permet en outre d'améliorer le confort des usagers du véhicule automobile en réduisant les vibrations. De plus, la poutre selon l'invention a un comportement très satisfaisant lors de crash-tests.

L'invention a donc pour objet une poutre de tableau de bord tubulaire, de section circulaire, destinée à s'étendre transversalement entre des montants verticaux d'un véhicule automobile, la poutre étant formée d'un seul tenant et présentant au moins deux diamètres différents entre ses deux extrémités, un plus grand diamètre de la poutre étant au niveau d'une extrémité de la poutre destinée à être située au niveau d'un siège conducteur du véhicule automobile, où au moins l'extrémité de la poutre destinée à être située au niveau d'un siège conducteur, et à être fixée à un montant vertical du véhicule automobile, est partiellement écrasée, de manière à avoir une section en arc de cercle dont la corde fermant la section se prolonge de part et d'autre dudit arc de cercle, ménageant une face plane dont des rebords latéraux encadrent la face bombée de l'arc de cercle.

Par d'un seul tenant, on entend que la poutre est formée d'une seule pièce qui présente différents diamètres sur sa longueur.

Préférentiellement, l'extrémité de la poutre destinée à être située au niveau du siège passager du véhicule automobile, à un diamètre égal au diamètre de l'extrémité de la poutre côté siège conducteur.

Avantageusement, l'extrémité de la poutre côté siège passager est écrasée de façon similaire à l'extrémité côté siège conducteur.

Les rebords latéraux de la face plane d'au moins une extrémité partiellement écrasée de la poutre comportent chacun une zone de fixation pour solidariser ladite extrémité partiellement écrasée à un montant vertical de véhicule automobile en deux points de fixation disposés de part et d'autre de l'axe longitudinal de la poutre. Bien entendu, il est possible de prévoir une unique zone de fixation sur l'extrémité partiellement écrasée, par exemple située dans l'axe de la poutre.

Avantageusement, le plus grand diamètre de la poutre est compris entre 75 mm et 125 mm de manière à obtenir un entraxe au moins au niveau d'une extrémité de la poutre partiellement écrasée compris entre 75 mm et 150 mm.

Avantageusement, la poutre présente au moins deux épaisseurs différentes entre ses deux extrémités, l'épaisseur la plus importante étant préférentiellement au niveau des extrémités de ladite poutre.

Avantageusement, la ou chaque extrémité de la poutre partiellement écrasée est à moitié aplatie en direction de l'autre moitié qui garde une forme semi-circulaire.

L'invention concerne également un bloc structurel destiné à être disposé à l'arrière d'un tableau de bord de véhicule automobile, ledit bloc structurel comportant au moins une poutre selon l'invention.

L'invention sera mieux comprise à la lecture de la description qui suit et à l'examen des figures qui l'accompagnent. Celles-ci sont présentées à titre indicatif et nullement limitatif de l'invention. Les figures représentent:
- Figure 1 : Une représentation schématique d'un véhicule automobile au niveau duquel est montré une poutre transversale de tableau de bord selon un exemple de réalisation de l'état de la technique déjà décrit;
- Figure 2 : Une représentation schématique d'un bloc structurel de l'état de la technique déjà décrit muni d'une poutre transversale fixée par des étriers latéraux;
- Figures 3A et 3B : Un agrandissement respectivement vu de face et en coupe transversale d'une extrémité aplatie d'une poutre transversale intégrant la fonction de fixation selon un autre exemple de réalisation de l'état de la technique déjà décrit;
- Figure 4 : Une représentation schématique d'un tube pouvant être utilisé pour réaliser la poutre de tableau de bord selon l'invention;
- Figure 5 : Une représentation d'une poutre de tableau de bord selon l'invention;
- Figure 6 : Un agrandissement de la poutre de la figure 5 au niveau d'une extrémité de fixation.

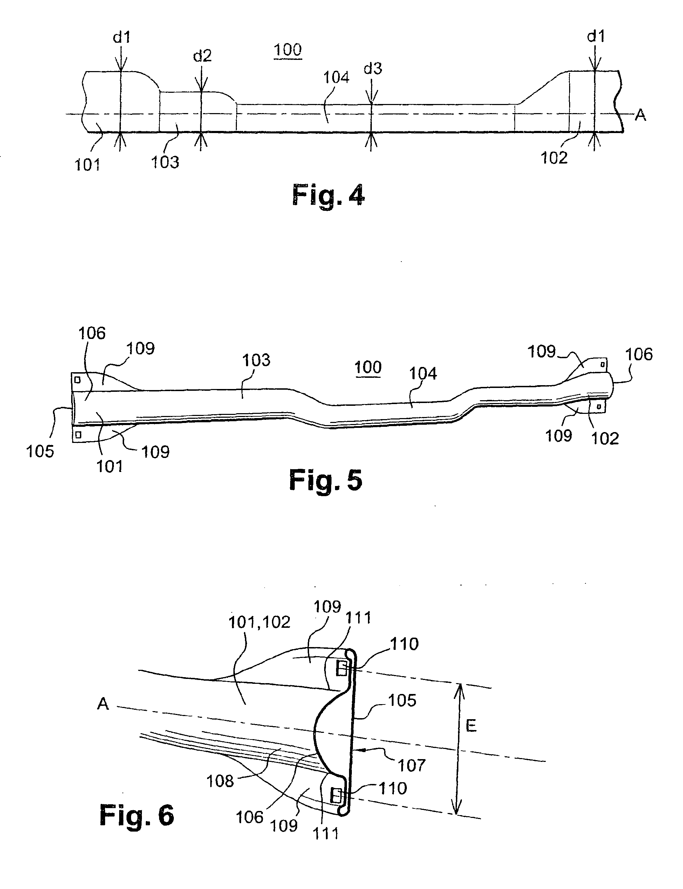

Sur la figure 4 est représenté un tube 100 longitudinal monobloc, présentant trois diamètres d1, d2 et d3 différents le long de l'axe longitudinal A. Plus précisément, les deux extrémités 101, 102 du tube 100 présentent un plus grand diamètre d1, une portion 103 du tube s'étendant dans le prolongement d'une des deux extrémités 101, 102 présentant un diamètre intermédiaire d2 et une autre portion 104 du tube, s'étendant entre la portion 103 de diamètre intermédiaire d2 et l'autre extrémité 102 de plus grand diamètre dl présentant un plus petit diamètre d3.

Un tel tube 100 peut avantageusement être utilisé pour former une poutre de tableau de bord car son encombrement entre les deux extrémités 101, 102 est réduit, seules les extrémités ayant un diamètre élargi d1. Par ailleurs, un tel tube 100 peut également prévoir des variations d'épaisseur. Avantageusement, l'épaisseur du matériau formant le tube 100 est plus importante au niveau des extrémités 101, 102 que sur le reste du tube 100. L'inertie du tube 100 varie parallèlement aux variations de diamètre et/ou d'épaisseur, les valeurs les plus grandes étant obtenues au niveau des extrémités 101, 102.

Dans l'invention on propose d'utiliser un tel tube 100 comme poutre de tableau de bord.

Conformément à l'invention, les extrémités 101, 102 sont partiellement aplaties (figures 5 et 6) de manière à former des extrémités de fixation. Autrement dit, la forme partiellement aplatie des extrémités 101, 102 permet d'intégrer la fonction de fixation directement dans les extrémités 101, 102, de sorte qu'il n'est pas nécessaire d'utiliser des éléments intermédiaires, tels que des étriers, pour solidariser les extrémités 101, 102 à des montants verticaux de véhicule automobile.

Comme cela est visible sur la figure 6, les extrémités 101, 102 présentent une section en arc de cercle fermée par la corde 105 dudit arc de cercle 106. L'extrémité 101, 102 du tube circulaire cylindrique 100 est à moitié aplatie en direction de l'autre moitié qui garde sa forme semi circulaire. Ainsi, une face 107 de l'extrémité 101, 102, destinée à être accolée à la structure de véhicule automobile est plane, tandis que la face 106 opposée est arrondie. La face plane 107 de l'extrémité 101, 102 déborde de part et d'autre de la face arrondie 108, ménageant deux ailettes latérales de fixation 109 qui s'étendent de part et d'autre de l'axe longitudinal du tube 100. La face plane 107 se prolonge dans le diamètre de la face arrondie 108 par les ailettes 109. Les ailettes 109 sont formées par la matière écrasée d'un demi périmètre de l'extrémité 101, 102 considérée et ont une épaisseur égale au double de l'épaisseur du matériau formant le tube 100 à l'endroit de l'extrémité 101, 102.

Avantageusement, on ménage un orifice de fixation 110 sur chacune des ailette 109 de manière à pouvoir fixer par exemple au moyens de vis de fixation l'extrémité 101, 102 concernée en deux points sur la structure du véhicule automobile.

Selon l'entraxe E souhaité, on approche ou on éloigne les orifices de fixation 110 des rebords 111 de la face arrondie 108.

Ainsi, par exemple, pour un tube 100 ayant les dimensions suivantes
d1 = 80 mm
d2 = 55 mm et épaisseur de la zone = 1.5 mm
d3 = 40 mm et épaisseur de la zone = 1.2 mm

On peut obtenir une extrémité de fixation, partiellement aplatie, présentant un entraxe E = 90 mm.

Pour obtenir les extrémités 101, 102 partiellement aplatie, on peut notamment les emboutir, avant, simultanément ou postérieurement au cintrage de la portion centrale 103, 104.

## Revendications

1. Poutre (100) de tableau de bord tubulaire, de section circulaire, destinée à s'étendre transversalement entre des montants verticaux d'un véhicule automobile, la poutre étant formée d'un seul tenant et présentant au moins deux diamètres (d1, d2, d3) différents entre ses deux extrémités, un plus grand diamètre (d1) de la poutre étant au niveau d'une extrémité (101, 102) de la poutre destinée à être située au niveau d'un siège conducteur du véhicule automobile, ou au moins l'extrémité de la poutre destinée à être située au niveau d'un siège conducteur, et à être fixée à un montant vertical du véhicule automobile, est partiellement écrasée, de manière à avoir une section en arc de cercle dont la corde (105) fermant la section se prolonge de part et d'autre dudit arc de cercle (106), ménageant une face plane (107) dont des rebords latéraux (109) encadrent la face bombée (108) de l'arc de cercle, et **caractérisée en ce que** les rebords latéraux de la face plane d'au moins une extrémité partiellement écrasée de la poutre comportent chacun une zone de fixation (110) pour solidariser ladite extrémité partiellement écrasée à un montant vertical de véhicule automobile en deux points de fixation disposés de part et d'autre de l'axe longitudinal de la poutre

2. Poutre selon la revendication 1, **caractérisée en ce qu'**une seconde extrémité (101, 102) de la poutre, destinée à être située au niveau du siège passager du véhicule automobile, a un diamètre égal au diamètre de la première extrémité.

3. Poutre selon l'une des revendications 1 à 2, **caractérisée en ce que** le plus grand diamètre de la poutre est compris entre 75 mm et 125 mm de manière à obtenir un entraxe au moins au niveau d'une extrémité de la poutre partiellement écrasée compris entre 75 mm et 150 mm.

4. Poutre selon l'une des revendications 1 à 3, **caractérisée en ce qu'**elle présente au moins deux épaisseurs différentes entre ses deux extrémités.

5. Poutre selon l'une des revendications 1 à 4, **caractérisé en ce que** le ou chaque extrémité de la poutre partiellement écrasée est à moitié aplatie en direction de l'autre moitié qui garde une forme semi-circulaire.

6. Bloc structurel destiné à être disposé à l'arrière d'un tableau de bord de véhicule automobile, ledit bloc structurel comportant au moins une poutre selon l'une des revendications 1 à 5.

## Claims

1. Tubular dashboard beam (100) which has a circular cross-section and which is intended to extend transversely between vertical pillars of a motor vehicle, the beam being formed in one piece and having at least two different diameters (d1, d2, d3) between the two ends thereof, a larger diameter (d1) of the beam being in the region of an end (101, 102) of the beam which is intended to be located in the region of a driver's seat of the motor vehicle, wherein at least the end of the beam which is intended to be located in the region of a driver's seat and to be fixed to a vertical pillar of the motor vehicle is partially crushed so as to have a cross-section in the form of a circular arc whose chord (105) which closes the cross-section extends at one side and the other of the circular arc (106) providing a planar face (107) whose lateral edges (109) surround the curved face (108) of the circular are, **characterised in that** the lateral edges of the planar face of at least one partially crushed end of the beam each comprise a fixing zone (110) in order to fixedly join the partially crushed end to a vertical pillar of the motor vehicle at two fixing locations which are arranged at one side and the other of the longitudinal axis of the beam.

2. Beam according to claim 1, **characterised in that** a second end (101, 102) of the beam which is intended to be located in the region of the passenger seat of the motor vehicle has a diameter which is equal to the diameter of the first end.

3. Beam according to either claim 1 or claim 2, **characterised in that** the largest diameter of the beam is between 75 mm and 125 mm so as to obtain an inter-wheel spacing at least in the region of one end of the partial crushed beam of between 75 mm and 150 mm.

4. Bream according to any one of claims 1 to 3, **characterised in that** it has at least two different thicknesses between the two ends thereof.

5. Beam according to any one of claims 1 to 4, **characterised in that** the or each end of the partially crushed beam is half-flattened in the direction of the other half which retains a semi-circular form.

6. Structural unit which is intended to be arranged at the rear of a motor vehicle dashboard, the structural unit comprising at least one beam according to any one of claims 1 to 5.

## Patentansprüche

1. Röhrenförmiger Träger (100) für Armaturenbrett mit kreisförmigem Querschnitt, der dazu bestimmt ist, sich quer zwischen den Vertikalstützen eines Kraftfahrzeugs zu erstrecken, wobei der Träger in einem Stück ausgebildet ist und zumindest zwei unterschiedliche Durchmesser (d1, d2, d3) zwischen seinen beiden Enden aufweist, wobei sich ein größerer Durchmesser (d1) des Trägers in dem Bereich eines Endes (101, 102) des Trägers befindet, welches dafür bestimmt ist, in dem Bereich eines Fahrersitzes des Kraftfahrzeuges angeordnet zu sein, wobei zumindest das Ende des Trägers, welches dafür bestimmt ist, in dem Bereich eines Fahrersitzes angeordnet und an einer Vertikalstütze des Kraftfahrzeugs befestigt zu sein, teilweise derart flachgedrückt ist, dass es einen kreisbogenförmigen Querschnitt aufweist, dessen Sehne (105), welche den Querschnitt abschließt, sich beidseits des Kreisbogens (106) erstreckt, wobei sie eine ebene Fläche (107) schafft, deren Seitenkanten (109) die gewölbte Fläche (108) des Kreisbogens einrahmen, **dadurch gekennzeichnet dass** die Seitenkanten der ebenen Fläche zumindest eines teilweise flachgedrückten Endes des Trägers jeweils einen Befestigungsbereich (110) aufweisen, um das teilweise flachgedrückte Ende mit einer Vertikalstütze des Kraftfahrzeugs an zwei Befestigungspunkten, welche beidseits der Längsachse des Trägers angeordnet sind, einstückig auszubilden.

2. Träger gemäß Anspruch 1, **dadurch gekennzeichnet, dass** ein zweites Ende (101, 102) des Trägers, welches dafür bestimmt ist, in dem Bereich des Beifahrersitzes des Kraftfahrzeugs angeordnet zu sein, einen Durchmesser aufweist, der gleich dem Durchmesser des ersten Endes ist.

3. Träger gemäß einem der Ansprüche 1 bis 2, **dadurch gekennzeichnet, dass** der größte Durchmesser des Trägers zwischen 75 mm und 125 mm liegt, so dass zumindest im Bereich eines teilweise flachgedrückten Endes des Trägers ein Durchmesserabstand zwischen 75 mm und 150 mm erreicht wird.

4. Träger gemäß einem der Ansprüche 1 bis 3, **dadurch gekennzeichnet, dass** er zumindest zwei unterschiedliche Dicken zwischen seinen beiden Enden aufweist.

5. Träger gemäß einem der Ansprüche 1 bis 4, **dadurch gekennzeichnet, dass** das oder jedes teilweise flachgedrückte Ende des Trägers zur Hälfte abgeflacht ist in Richtung der anderen Hälfte, welche eine halbkreisförmige Form bewahrt.

6. Strukturblock, der dazu bestimmt ist, im hinteren Bereich eines Armaturenbrettes für ein Kraftfahrzeug angeordnet zu werden, wobei der Strukturblock zumindest einen Träger gemäß einem der Ansprüche 1 bis 5 aufweist.
